# EUROPEAN PATENT SPECIFICATION

(11) **EP 1 044 600 B1**
(45) Date of publication and mention of the grant of the patent: **17.11.2004**
(21) Application number: 00201334.0
(22) Date of filing: 13.04.2000
(51) Int. Cl.: A01G 5/00, B07C 5/12

(54) **Device for sorting and further handling of long-stalked plants**
Vorrichtung zum Sortieren und zur Weiterförderung langstieliger Pflanzen
Dispositif de tri et de manutention des plants à tige longue

(30) Priority: 15.04.1999 NL 1011811
(43) Date of publication of application: 18.10.2000
(73) Proprietor: Baggermans Transport- en Machinefabriek B.V., 5570 AD Bergeyk (NL)
(72) Inventor: Baggermans, Gerardus Petrus Antonius, 5571 HB Bergeijk (NL)
(74) Representative: Valkonet, Rutger

(56) References cited:
- EP-A- 0 449 386
- NL-A- 9 300 969
- NL-C- 1 002 445
- US-A- 3 659 709

## Description

The invention relates to a device for sorting and further handling long-stalked plants according to the preamble of claim 1, comprising a first conveyor belt, on which long-stalked plants can be transported past a detection device, which detection device senses characteristics of the long-stalked plants and compares said characteristics with preset characteristics, wherein the device includes means for sorting the long-stalked plants on the basis of their detected characteristics and supply them to collecting stations, and wherein the device furthermore comprises a number of operating stations for subjecting the collected long-stalked plants to further operations.

Long-stalked plants, such as flowers or lavender, are usually presented in unsorted condition after harvesting. In connection with the further handling and the presentation to the public it is desirable to sort said flowers on the basis of certain characteristics, such as quality, freshness, length, etc. The manual sorting of flowers is a time-consuming, costly and unpleasant activity. In order to mechanize this work, a device of the kind referred to in the introduction is known, for example from UL9300969. With this known device the unsorted flower stems are carried past a detection device on a conveyor belt, which detection device senses characteristics of said flower stems and compares said characteristics with preset characteristics. The flowers stems are then taken over by a system of aligned conveyor belts, between which exit stations for sorted flower stems are disposed. The exit stations are thereby controlled by signals from the detection device, in such a manner that flower stems having selected characteristics are allowed to pass at each exit station. The sorted stems are received in receptacles under each exit station, which, once a predetermined number of stems is present therein, pass said stems to a conveyor belt, which transports said stems further to operating stations located further down the operating line for cutting the stems to length, stripping off leaves and binding the stems into a bundle.

One drawback of this prior art device is that the process is difficult to survey due to the fact that operations are carried out at different levels. Another drawback is the fact that the sorted and collected flower stems are all carried past the same operating stations, so that the finishing operations are the same for each grade that has been sorted. The object of the present invention is to provide a device of the kind indicated above which overcomes the aforesaid drawbacks.

In order to accomplish the above objective, the device according to the invention is characterized in claim 1. Two or more take-over stations are disposed beside the first conveyor belt for taking over flower stems having the desired characteristics from the conveyor belt, wherein take-over means are disposed above the conveyor belt at each take-over station, which take-over means are movable in transverse direction over the conveyor belt surface so as to supply a long-stalked plant present on the conveyor belt to the take-over station in question, wherein said take-over means can be controlled by a signal from the detection device when a long-stalked plant having the desired characteristics is present opposite the take-over station in question. With the device according to the invention, the unsorted plants are placed on a conveyor belt and carried past a detection system. Said detection system senses the characteristics of a long-stalked plant being presented and compares it with characteristics that have been preset in the detection system. Said characteristics may for example be the length categories into which the long-stalked plants are to be subdivided, and also freshness and quality characteristics. A number of take-over stations are disposed one behind another after the detection system, seen in the direction of movement of the conveyor belt, said number corresponding to the number of characteristics on the basis of which sorting is to take place. Take-over means are disposed above the conveyor belt opposite each of the take-over stations, which take-over means are movable transversely over the conveyor belt for transporting flower stems which are present on the conveyor belt to the take-over station. When the detection system has detected characteristics of a particular flower stem which correspond to a characteristic stored in the detection system, the detection system will deliver a control signal to the drive unit of the aforesaid means, which are disposed opposite the take-over station that is intended to receive flower stems having the detected characteristic, such that when the flower stem having the detected characteristic is positioned opposite the take-over station that is intended to receive flower stems having the detected characteristic, said means will be activated to move the flower stems from the conveyor belt in the direction of the take-over station.

Each of the take-over stations comprises a number of parallel second conveyor belts, which can all be moved simultaneously in lateral direction so as to align the flower stems that have been taken over. In this manner it can be arranged that the flower stems present in the take-over station all lie in the same plane, for example with their tops.

According to an advantageous embodiment the take-over means for moving the flower stems to the desired take-over station are made up of two or more chains or ropes extending in transverse direction over the conveyor belt surface, which are passed over pulleys and which carry two or more pins which extend nearly as far as the conveyor belt surface in their operative position. The chains or ropes disposed opposite a respective take-over station are coupled together and also to a drive unit, which drive unit receives a signal from the detection device the moment a flower stem having the characteristics associated with the take-over station in question is present opposite said station, as a result of which said drive unit is activated and the chains start to move, causing said pins to move transversely to the conveyor belt surface, as a result of which the stem in question is supplied to the take-over station from the conveyor belt. The chains or ropes can thereby extend obliquely over the conveyor belt surface, in such a manner that the degree of motion of said pins in the direction of movement of the conveyor belt is about equal to the motion of the conveyor belt, so that the pins only exhibit a movement transversely to the conveyor belt and there is no difference in movement between the pins and the conveyor belt in its direction of movement. This means that the pins do not exert a force on the flower stem in question in the direction of movement of the conveyor belt, but only move the stem in a direction transversely to the direction of movement of the conveyor belt.

The detection system may be an optical/electronic vision system which is known per se.

An advantageous embodiment of the device according to the invention is characterized in that each take-over station connects to an associated operating line for sorted plants. In this manner a device has been obtained which includes an operating line for each selected kind of flower stems, said operating line comprising operating stations which are specifically arranged for this type of flower stems.

According to another embodiment, the conveyor belts of each take-over station connect to a buffer device which comprises a number of third conveyor belts which can be driven in steps, which conveyor belts can all be continuously driven at the same time once a predetermined number of stems are present thereon in order to transfer the buffered stems to a collecting station via a further handling belt. This makes it possible to adjust the device so that it will deliver a predetermined number of sorted stems each time, which stems can subsequently be stripped of part of their leaves and be bundled into a bouquet. In order to ensure that the stems will move correctly along with the conveyor belts, in spite of the conveyor belts being moved in steps, a rope is present above some of said conveyor belts, which rope is pressed against the associated conveyor belt and moves along therewith.

In order to be able to subject each type of flower stems that has been sorted to its own specific finishing operations, each operating line includes specific operating stations for cutting the flower stems in question to length, stripping off leaves therefrom, bundling them, etc.

Thus a device has been obtained wherein the flower stems are transported through the device at practically one level, so that the process is easy to survey and each type of flower stems can be subjected to its own specific finishing operations.

The invention will now be explained in more detail with reference to the drawings, which show and exemplary embodiment of a device according to the invention.

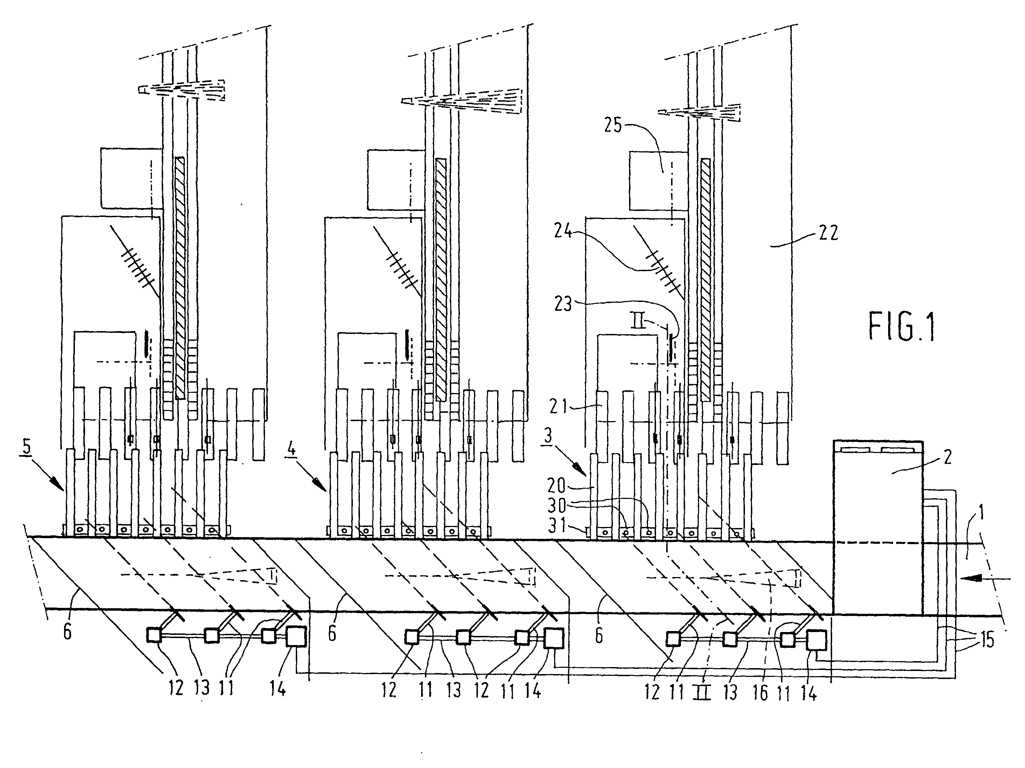

Figure 1 is a schematic top plan view, not to scale, of an embodiment of a device according to the invention.

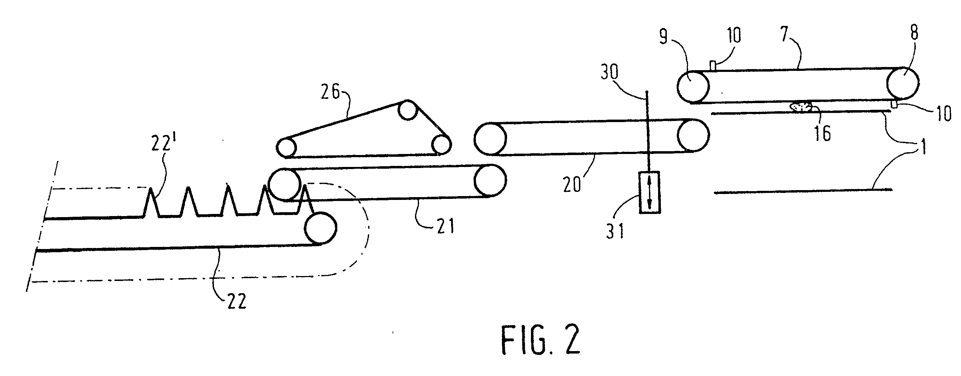

Figure 2 is a schematic sectional view, not to scale, of a part of the device of Figure 1.

In the figures, numeral 1 indicates a first conveyor belt. Present above conveyor belt 1 is a detection system 2 comprising means (not shown) for sensing characteristics of a flower stem which is present on conveyor belt 1, as well as means in which the desired characteristics on the basis of which sorting is to take place can be stored. A number of take-over stations - three in the present embodiment - are disposed beside the conveyor belt, which stations are indicated by the numerals 3, 4 and 5. Each of said take-over stations functions to receive flower stems having specific, preset characteristics. Station 3, for example, can thus function to receive flower stems having a length of about 50 cm, whilst station 4 functions to receive flower stems having a length of about 80 cm and station 5 is arranged for receiving flower stems having a length of about 60 cm. It will be apparent that under certain conditions it is also possible to sort according to characteristics other than length, think in this connection of specific quality or freshness characteristics, for example. Furthermore it is conceivable to sort according to colour.

Disposed opposite each of the take-over stations, above the conveyor belt surface 1, are take-over means 6, which function to push a stem from the conveyor belt surface 1 to the take-over station when a stem having the characteristics intended for the take-over station in question is present in front of said take-over station. In the present embodiment said means 6 are made up of three chains or ropes 7, which are passed over chain wheels 8 and 9 and which are provided with two pin-shaped projections 10, whose length is such that the pin 10 in question extends nearly as far as the conveyor belt surface 1 in their operative position. The chain wheels 8 each include a shaft 11, which is coupled, via a suitable coupling 12, to the shaft of a drive unit 14. Each drive unit 14 is connected, via a signal line 15, to detection device 2. For example, when the drive unit 14 associated with take-over station 3 receives a signal from detection device 2 that a flower stem having the characteristics intended for take-over station 3 is present opposite said station, the drive unit 14 will drive chains 7, whereby pins 10 move over the conveyor belt surface and push the stem 16 that is present thereon from the conveyor belt surface in the direction of the take-over station 3. In order to prevent pin 10 from moving stem 16 in the direction of the conveyor belt surface as well while moving over the conveyor belt surface 1, the chains are placed obliquely above the conveyor belt surface 1.

Each of the take-over stations 3, 4 or 5 includes a number of further parallel conveyor belts 20, which are interconnected in such a manner that they can be moved laterally by suitable means in order to align the received stems such that they are neatly arranged with respect to each other, with their flower tops lying in one plane. Present on the front side of each take-over station are a number of pins 30, which are arranged on a beam 31 which is capable of up-and-down movement. When a flower stem is being supplied to the station in question, the pins 30 extend upwards, so that the flower stem comes to abut against said pins in an aligned position.

The belts 20 of the take-over station connect to further belts 21 of a buffer device. Said belts 21 are initially driven in steps, until a predetermined desired number of stems are present on said conveyor belts, after which the belts 21 are driven continuously so as to deliver the collected stems to a further handling belt 22, on which a number of collecting stations 22' are present for receiving the stems delivered by the buffer device. The stems are further handled in a known manner and carried past a cut-off device 23, a leave-stripping device 24 and a binding device 25. In order to ensure that the stems which are present on the buffer device 21 move correctly along with the belts 21, ropes 26 are provided above some of said belts 21, which ropes are pressed against said belts 21 in question so as to ensure a controlled transport of the stems.

In the collecting stations 22' the stems are pressed down slightly by a foam rubber press-down belt which moves along above the belt. The operating stations for cutting off, stripping off leaves, binding and any further operations, such as packaging, can be selected specifically in each operating line for the type of flower stems to be handled therein.

From the foregoing it will be apparent that the invention provides a device of relatively simple construction, which provides a good survey of the entire process and which can be adapted according to the desired operation for each type of flower stems.

Although the device which is shown in the drawing includes three take-over stations 3, 4 and 5, it will be apparent that this device is of modular design, such that it can be freely fitted with more or fewer take-over stations in dependence on the number of characteristics according to which sorting is to take place.

## Claims

1. A device for sorting and further handling long-stalked plants, comprising a first conveyor belt (1), on which said long-stalked plants can be transported past a detection device (2), which detection device (2) senses characteristics of the long-stalked plants and compares said characteristics with preset characteristics, wherein the device includes means for sorting the long-stalked plants on the basis of their detected characteristics and supply them to collecting stations, and wherein the device furthermore comprises a number of operating stations for subjecting the collected long-stalked plants to further operations, wherein two or more take-over stations (3, 4, 5) are disposed beside the first conveyor belt (1) for taking over long-stalked plants having the desired characteristics from the conveyor belt (1), wherein take-over means (6) are disposed above the conveyor belt (1) at each take-over station (3, 4, 5), which take-over means (6) are movable in transverse direction over the conveyor belt surface so as to supply a long-stalked plant present on the conveyor belt (1) to the take-over station (3, 4, 5) in question, wherein said take-over means can be controlled by a signal from the detection device (2) when a long-stalked plant having the desired characteristics is present opposite the take-over station (3, 4, 5) in question, **characterized in that** each of the take-over stations (3, 4, 5) comprises a number of parallel second conveyor belts (20), which can all be moved simultaneously in lateral direction so as to align the long-stalked plants that have been taken over, wherein vertical pins (30) are disposed between the conveyor belts (20), which pins (30) are capable of up-and-down movement for the purpose of briefly stopping and aligning a plant that has been taken.

2. A device according to claim 1, **characterized in that** in each operating line the conveyor belts of each take-over station connect to a buffer device, which comprises a number of third conveyor belts which can be driven in steps, which conveyor belts can all be continuously driven at the same time once a predetermined number of plants are present thereon in order to transfer the buffered long-stalked plants to a collecting station via a further handling belt.

3. A device according to claim 2, **characterized in that** a rope is present above some of the third conveyor belts of each buffer device, which rope is pressed against the associated conveyor belt and moves along therewith.

4. A device according to anyone of the preceding claims, **characterized in that** each operating line furthermore includes specific operating stations for cutting the long-stalked plants that have been sorted for said operating line to length, stripping off leaves therefrom, bundling them, etc.

5. A device according to anyone of the preceding claims, **characterized in that** said take-over means are made up of two or more chains or ropes extending in transverse direction over the conveyor belt surface, which are passed over pulleys and which carry two or more pins which extend nearly as far as the conveyor belt surface in their operative position.

6. A device according to anyone of the preceding claims, **characterized in that** each take-over station connects to an associated operating line for sorted plants.

## Patentansprüche

1. Vorrichtung zum Sortieren und Weiterhandhaben von langstieligen Pflanzen mit einem ersten Förderband (1), auf dem die langstieligen Pflanzen hinter eine Erfassungsvorrichtung (2) transportiert werden können, wobei die Erfassungsvorrichtung (2) Merkmale der langstieligen Pflanzen erkennt und diese Merkmale mit voreingestellten Merkmalen vergleicht, worin die Vorrichtung eine Einrichtung zum Sortieren der langstieligen Pflanzen ausgehend von deren erfassten Merkmalen hat, und sie zu Sammelstationen liefert, und wobei die Vorrichtung außerdem eine Anzahl von Arbeitsstationen umfasst, um die gesammelten langstieligen Pflanzen weiteren Vorgängen auszusetzen, worin zwei oder mehr Übernahmestationen (3, 4, 5) neben dem ersten Förderband (1) vorgesehen sind, um die langstieligen Pflanzen, die die gewünschten Merkmale aufweisen, von dem Förderband (1) zu übernehmen, wobei die Übernahmeeinrichtungen (6) über dem Förderband (1) bei jeder Übernahmestation (3, 4, 5) vorgesehen sind, und die Übernahmeeinrichtungen (6) in der Querrichtung über der Förderbandoberfläche beweglich sind, um so eine auf dem Förderband (1) vorhandene, langstielige Pflanze der entsprechenden Übernahmestation (3, 4, 5) zuzuliefern, wobei die Übernahmeeinrichtungen durch ein Signal von der Erfassungsvorrichtung (2) gesteuert werden können, wenn eine langstielige Pflanze, die die gewünschten Merkmale aufweist, gegenüber der entsprechenden Übernahmestation (3, 4, 5) vorhanden ist, **dadurch gekennzeichnet, dass** jede der Übernahmestationen (3, 4, 5) eine Anzahl von parallelen, zweiten Förderbändern (20) aufweist, die alle zugleich in der Seitenrichtung bewegt werden können, um so die langstieligen Pflanzen auszurichten, die übernommen wurden, wobei vertikale Bolzen (30) zwischen den Förderbändern (20) vorgesehen sind, und die Bolzen (30) in der Lage sind, eine Auf- und Abbewegung durchzuführen, um eine Pflanze, die übernommen wurde, kurz anzuhalten und auszurichten.

2. Vorrichtung gemäß Anspruch 1, **dadurch gekennzeichnet, dass** die Förderbänder jeder Übernahmestation jeder Arbeitslinie mit einer Puffervorrichtung verbunden sind, die eine Anzahl von dritten Förderbändern aufweist, die in Schritten angetrieben werden können, wobei die Förderbänder alle fortgesetzt zur selben Zeit angetrieben werden können, sobald eine vorbestimmte Anzahl von Pflanzen darauf vorhanden ist, um die gepufferten langstieligen Pflanzen über ein weiteres Handhabungsband zu einer Sammelstation zu übertragen.

3. Vorrichtung gemäß Anspruch 2, **dadurch gekennzeichnet, dass** ein Seil über einige der dritten Förderbänder jeder Puffervorrichtung vorhanden ist, wobei das Seil gegen das zugeordnete Förderband gedrückt und daran entlang bewegt wird.

4. Vorrichtung gemäß jedem der vorangehenden Ansprüche, **dadurch gekennzeichnet, dass** jede Arbeitslinie außerdem spezifische Arbeitsstationen zum Schneiden der langstieligen Pflanzen, die für die Arbeitslinie sortiert wurden, auf eine Länge, Abziehen der Blätter davon, Bündeln usw. umfasst.

5. Vorrichtung gemäß jedem der vorangehenden Ansprüche, **dadurch gekennzeichnet, dass** die Übernahmeeinrichtungen aus zwei oder mehr Ketten oder Seilen hergestellt sind, die sich in Querrichtung über der Förderbandoberfläche erstrecken, die über Riemenscheiben geführt werden und die zwei oder mehr Bolzen tragen, die sich in ihrer Arbeitsposition beinahe soweit wie die Förderbandoberfläche erstrecken.

6. Vorrichtung gemäß jedem der vorangehenden Ansprüche, **dadurch gekennzeichnet, dass** jede Übernahmestation mit einer zugeordneten Arbeitslinie für sortierte Pflanzen verbunden ist.

## Revendications

1. Dispositif de tri et de manutention de plantes à tige longue, comprenant une première bande de transport (1), sur laquelle lesdites plantes à tige longue peuvent être transportées au-delà d'un dispositif de détection (2), lequel dispositif de détection (2) détecte les caractéristiques des plantes à tige longue et compare lesdites caractéristiques avec des caractéristiques pré-réglées, le dispositif comprenant des moyens permettant de trier des plantes à tige longue en fonction de leurs caractéristiques détectées et de les amener à des postes de collecte, et le dispositif comprenant en outre un certain nombre de postes d'exploitation permettant de soumettre les plantes à tige longue collectées à d'autres opérations, deux postes de saisie (3, 4, 5) ou plus étant disposés à côté de la première bande de transport (1) pour saisir les plantes à tige longue présentant les caractéristiques souhaitées depuis la bande de transport (1), les moyens de saisie (6) étant disposés au-dessus de la bande de transport (1) à chaque poste de saisie (3, 4, 5), lesquels moyens de soulèvement (6) étant mobiles en direction transversale au-dessus de la surface de la bande de transport, de manière à amener une plante à tige longue présente sur la bande de transport (1) au poste de saisie (3, 4, 5) en question, lesdits moyens de saisie pouvant être contrôlés par un signal provenant du dispositif de détection (2), lorsqu'une plante à tige longue présentant les caractéristiques souhaitées se trouve à l'opposé du poste de saisie (3, 4, 5) en question, **caractérisé en ce que** chacun des postes de saisie (3, 4, 5) comprend un certain nombre de deuxièmes bandes de transport (20) parallèles, qui peuvent toutes être déplacées simultanément en direction latérale, de manière à aligner les plantes à tige longue qui ont été saisies, des broches (30) verticales étant disposées entre les bandes de transport (20), lesquelles broches (30) peuvent se déplacer de haut en bas afin d'arrêter rapidement une plante qui a été saisie et de l'aligner.

2. Dispositif selon la revendication 1, **caractérisé en ce que** dans chaque ligne d'exploitation, les bandes de transport de chaque poste de saisie sont raccordées à un dispositif d'amortissement, qui comprend un certain nombre de troisièmes bandes de transport qui peuvent être entraînées en pas, lesquelles bandes de transport peuvent être toutes entraînées en même temps de manière continue, une fois qu'un nombre prédéterminé de plantes est présent sur lesdites bandes, afin de transférer les plantes à tige longue amorties vers un poste de collecte via une autre bande de manutention.

3. Dispositif selon la revendication 2, **caractérisé en ce qu'**une corde est présente au-dessus de certaines des troisièmes bandes de transport de chaque dispositif d'amortissement, laquelle corde est pressée contre la bande de transport associée et se déplace en même temps qu'elle.

4. Dispositif selon l'une quelconque des revendications précédentes, **caractérisé en ce que** chaque ligne d'exploitation comprend en outre des postes d'exploitation spécifiques destinés à découper en longueur les plantes à tige longue qui ont été triées pour ladite ligne d'exploitation, à retirer leurs feuilles, à les mettre en bouquet, etc.

5. Dispositif selon l'une quelconque des revendications précédentes, **caractérisé en ce que** lesdits moyens de saisie sont constitués de deux chaînes ou cordes ou plus s'étendant en direction transversale au-dessus de la surface de la bande de transport, qui passent au-dessus de poulies et qui transportent deux broches ou plus qui s'étendent pratiquement aussi loin que la surface de la bande de transport dans leur position d'exploitation.

6. Dispositif selon l'une quelconque des revendications précédentes, **caractérisé en ce que** chaque poste de saisie est raccordé à une ligne d'exploitation associée pour les plantes triées.
